# EUROPEAN PATENT APPLICATION

(11) **EP 0 970 848 A2**
(43) Date of publication of application: **12.01.2000**
(21) Application number: 99113325.7
(22) Date of filing: 09.07.1999
(51) Int. Cl.: B60Q 1/076

(54) **Device for adjusting the position of a scooter headlight**

(30) Priority: 09.07.1998 IT TO980601
(71) Applicant: Benelli S.p.A., 61100 Pesaro (IT)
(72) Inventor: Ceccucci, Michele, 61100 Pesaro (IT)
(74) Representative: Dini, Roberto, Dr. Ing.

(57) **Abstract**

A device is described, for adjusting the position of at least a headlight unit (3;30) of a scooter, comprising at least a projector unit (4;31), which can swing about an axis being transversal with respect to the running direction.

According to the invention, there are provided adjustment means (12;32) for said projector unit (4;31), actuation means (7;17) for said adjustment and means (6;14,15;35) for transmitting the adjustment from said actuation means (7;17) to said adjustment means (12;32), in order to obtain the adjustment of the position of the headlight unit directly from the driving position.

## Description

The present invention refers to a device for adjusting the position of a scooter headlight unit.

As known, the light beam of a scooter headlight unit should comply with determined parameters.

One of such parameters is its height orientation, i.e. the light beam should not be directed too high up for avoiding a blinding glare against the vehicles travelling in the opposite direction, nor too low down for avoiding a reduced range of visibility when using the scooter.

In general, the adjustment of the direction of the light beam of a scooter headlight unit is executed during the manufacturing, in a standard way, i.e. such an adjustment is done in function of a certain load carried by the scooter in the normal usage.

If the scooter load varies, then the light beam direction may change either in upwards or downwards direction, according to the load being present at that time on the scooter.

Therefore, it is necessary to allows for an adjustment, in order to correct the position of the headlight unit according to the load carried by the scooter.

It is known, for allowing such an adjustment, to provide an adjusting screw being connected to the headlight unit; by tightening or unscrewing said screw, the headlight unit orientation can be either lifted up or lowered down.

In general, said screw is arranged substantially parallel to the horizontal axis of the headlight unit.

The access to such an adjusting screw is obtained through a slit being present on the scooter fairing, wherein a tool, such as a screwdriver, is introduced to perform the adjustment.

In some instances, the access to the adjusting screw is provided in the front side of the fairing, under the headlight unit.

In other instances, the access to the adjusting screw may even require to disassemble a part of the fairing.

The above type of adjustment, even if quite efficient, requires however a tool, which is not always available at hand.

Moreover, an adjustment based on the load being carried by the scooter is not possible, since the driver has to perform it standing on the front of the scooter.

It is also known to have the adjusting screws placed under a movable part of the fairing, in a vertical position with respect to the axis of the headlight unit.

In this instance, the adjustment first require to lift up the cited part of the fairing, for then making the adjustment with a screwdriver operating the screw.

However, also in this instance a tool is still required for the adjustment.

When adopting such an adjustment method with a screw in a vertical position , being also forwarded with respect to the scooter saddle, this operation cannot be performed while sitting on the scooter; consequently, the adjustment will not be so accurate as the scooter has no passenger load on it.

The aim of the present invention is that of providing a device for adjusting the position of a scooter headlight, which does not have the drawbacks of the present state of the art and is, on the contrary, advantageous in terms of functionality and easiness of use.

In order to achieve such aim, it is the object of the present invention a device for adjusting the position of the headlight unit of a scooter having the features of the annexed claims, which form an integral part of the present description.

Further aims and advantages of the present invention will become apparent from the following detailed description and the annexed drawings, which are supplied by way of non limiting example, wherein:
- figure 1 shows a vertical section of a front part of the shield of a scooter incorporating the device for adjusting the position of the headlight unit according to the present invention;
- figure 2 shows a vertical section of a variant embodiment of the device for adjusting the position of the headlight unit according to the present invention;
- figure 3 shows a vertical section of another variant embodiment of the device for adjusting the position of the headlight unit according to the present invention.

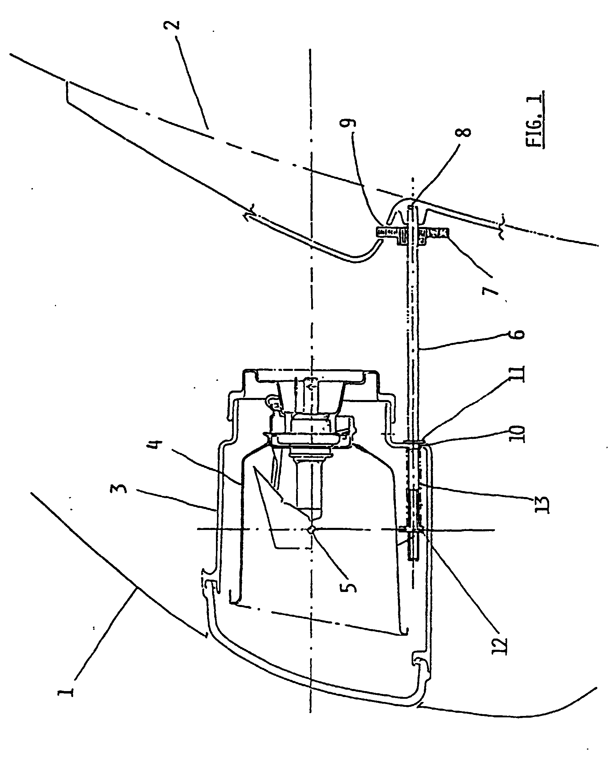

In figure 1, which represents a vertical section of a front part of the shield of a scooter incorporating the device for adjusting the position of the headlight unit according to the present invention, number 1 indicates the front fairing of the scooter shield, and number 2 indicates a part of a tray recess being defined on the inner side of the scooter shield.

Said recess has a closing cover, not shown in the figure, with a key lock as commonly known.

Number 3 indicates a scooter headlight unit and number 4 a projector unit.

Said projector unit 4 can swing on an axis, being transversal with respect to the scooter running direction, passing through the axis 5.

Number 6 indicates a rod, which is threaded on one end and carrying near its opposite end a roller 7 made integral to the rod 6 with known means.

A part of the round crown of said roller 7 protrudes in the fray recess 2, through a slit 9 being obtained in a lower portion of said recess.

The part of the round crown of said roller 7 protruding inside the tray recess is so configured for allowing easy rotation of the roller itself

In order to simplify the rotation of the roller, the external crown has an appropriate knurling.

The unthreaded end of said rod 6 is inserted in a seat 8 being defined on the external part of the tray recess 2, which operates as a first support for the rod 6.

The other end of the rod 6 is inserted in the body of the headlight unit through a hole 10 provided on the body of the headlight unit, which also perform the function of a second support for the rod 6.

The rod 6 has a ring 11 at a certain distance from the threaded end, which has the function of stopping the entry of the rod 6 in the body of the headlight unit.

On the lower side of the projector unit 4, and outside it, a vertical bracket 12 is provided, which is integrally connected to the projector, in a middle position of the latter.

Said bracket 12 has a threaded hole suitable for screwing the threaded part of the rod 6.

Number 13 indicates a spiral spring, which is assembled preloaded.

An end of said spring 13 rests on the inner wall of the body of the headlight unit 3; the other end of the spring 13 rests on the bracket 12.

Said spring 13 has the function of maintaining the projector unit 4 in the adjustment position; in fact, the preloaded spring, i.e. pressed, tends to expand; since one end of the spring rests on the body of the headlight unit, a thrust on the bracket 12 is determined.

The bracket 12, being screwed on the rod 6, tends to entrain the latter with it, but since the ring 11 is already striking against the body of the headlight unit, it cannot move in that direction.

The motion in the opposite sense of the rod 6 is hindered by the thrust exerted by the spring 13 on the bracket 12; in fact, to be able to move, the rod 6 has to overcome the resistance of the spring 13.

Thus, since the rod 6 cannot slide in either direction, any undesired swinging of the projector unit 4 is hindered.

When a rotation is exerted by the roller on the rod 6, the latter will be screwed or unscrewed in the bracket 12.

Since the rod is blocked and cannot move to-and-fro, as previously described, such a displacement is transmitted from the threading to the bracket 12; since the bracket 12 is integral with the projector unit 4, the latter will swing up or down, so adjusting the position of the headlight unit.

The features of the device for adjusting the position of a scooter headlight are clear from the above description and the annexed drawings.

According to the above description also the advantages of the device for adjusting the position of a scooter headlight according to the present description are clear. In particular, these are:
- direct access for adjusting the light beam from the driving position, since the adjusting roller is located in the tray recess;
- easy access to the adjusting roller, since only the tray recess needs to be opened;
- possibility of changing the headlight unit position according to the scooter actual load conditions; in fact, since the tray recess can be reached from the driving position, the adjustment can be made directly with the user seated in the driving position;
- the adjustment can be done without the use of tools;
- mud and dust protection is granted for the adjustment control, which is protected by the tray recess;
- no tampering from third parties is allowed, since the adjustment means are located in a recess being protected by a cover with a key-lock.

It is obvious that many changes are possible for the man skilled in the art to the device for adjusting the position of a scooter headlight described above by way of example, without departing from the novelty spirit of the inventive idea.

For instance, the spring 13 can be replaced by an elastic ring being inserted in a throat defined on the rod 6, directly inside the body of the headlight unit 3, so as to stop a likely withdrawal of the rod 6 from the body of the headlight unit.

In order to avoid possible dimensional changes to the bracket following a long exposure to sun light or low temperatures, which may cause coupling problems between the threaded hole and rod threading, the thread of the bracket 12 could be replaced by inserting a nut in the bracket, during the moulding of the piece or by driving it in after the moulding operation.

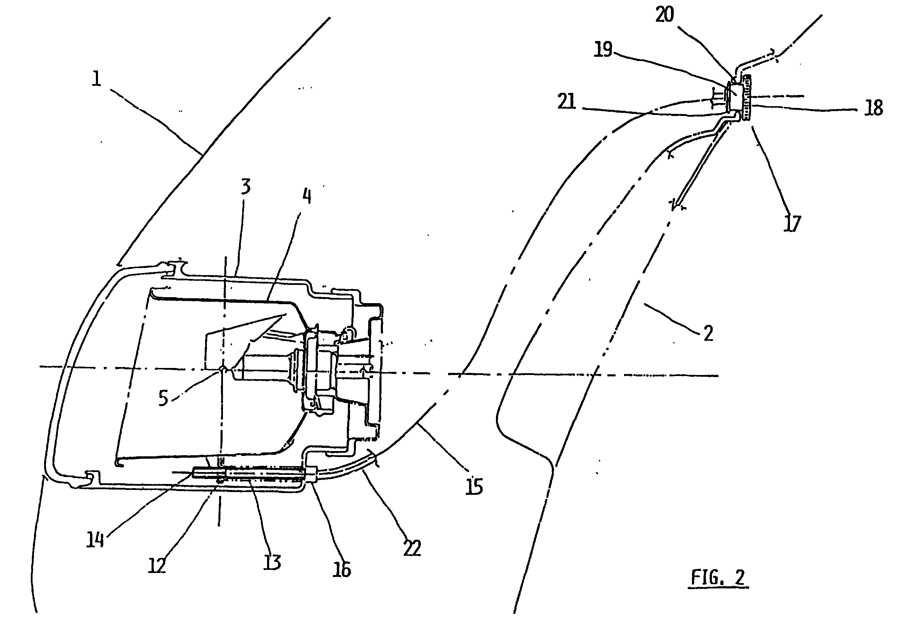

Another example of a variant embodiment is represented in figure 2, where the rod 6 is replaced by a pin 14 and a flexible cable 15.

In the description of figure 2 the same reference numbers are used for the components being common to both solutions.

Said pin 14 has a stop ring 16 and a threaded end being screwed in the bracket 12, whereas the other end is connected integrally to the flexible cable 15.

Said pin 14 is inserted in the body of the headlight unit through the hole 10. The free end of said flexible cable 15 is connected to a roller 17 inserted in the tray recess 2.

The roller 17 is made integral to the flexible cable 15 in a known way.

Said roller 17 has two portions being of different diameter, i.e. a first portion 18 with a knurled external crown for making the rotation easier, and a cylindrical second portion 19 having a smaller diameter compared to the first portion 18.

Said second portion 19 is inserted in a hole 20 being present in a wall of the tray recess.

Said roller is held in the hole 20 of the tray recess with the use of known means, such as an elastic ring 21 inserted in a throat being defined on said second portion 19. Number 22 indicates a sheath for covering and protecting said flexible cable.

The operation of the device is the same as for the solution previously described, i.e. by rotating the roller 17, the rotary motion is transmitted by means of the flexible cable 15 to the pin 14, which is screwed or unscrewed in the bracket 12.

Since the pin is blocked and cannot move to-and-fro, as described for the rod 6 in the previous solution, such a displacement is transmitted by the threading to the bracket 12; since the bracket 12 is integral with the projector unit 4, the latter will swing up or down, for the adjustment of its position.

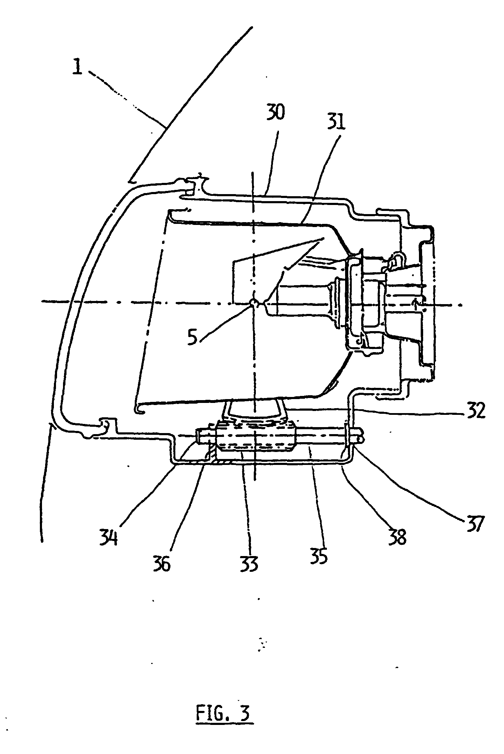

A further example of a variant embodiment is shown in figure 3, where number 30 indicates a headlight unit and 31 a projector unit.

Said projector unit 31, which can swing on an axis being transversal with respect to the to the scooter running direction, passing through the axis 5, has a bracket 32 in its lower portion; said bracket 323 has substantially the shape of a circular crown arch, whose axis coincides with the transversal axis about which the projector unit can swing.

The external portion of said circular crown has indentations suitable to engage a worm screw 33.

Said worm screw 33 is inserted in the body of the headlight unit 30.

Said worm screw 33 has a small cylindrical shaft on each end, being indicated with 34 and 35 respectively, said small shafts having a smaller diameter than the worm screw 33.

One of said small shafts rests on a support 36, whereas the other small shaft is inserted in a hole 37 passing through the body of the headlight unit, so as to come out of the headlight unit itself.

The support 36 and the hole 37 have the function to position in height the worm screw 33, so that the latter engages the toothed crown of the bracket 32.

In order to avoid a lengthwise displacement of the worm screw 33, the support 36 is so positioned to strike against the step resulting from the difference of diameter between the worm screw 33 and the small shaft 34, so as to block its lengthwise motion towards the front of the headlight unit.

In order to avoid the lengthwise motion in the other direction, the insertion of an elastic ring 38 is provided, in a throat being present on the shaft 35, which strikes against the inner wall of the headlight unit body.

The length of the part of the small shaft 35 which protrudes outside the body of the headlight unit 30 depends upon the solution being adopted for the positioning the adjustment means.

In other words, if the adjustment is done through a roller keyed to the small shaft 35, the length of the latter will let the crown of the keyed roller to protrude in the tray recess; if, on the contrary, the adjustment is done through a roller connected to the shaft 35 by a flexible cable, the small shaft will just have to protrude a sufficient length from the headlight unit body to allow the connection of the flexible cable.

The operation of the device occurs as described in the previous solutions; by imparting a rotation to the roller, the rotary motion is transmitted to the worm screw 33, which exerts a rotary motion to the arch of the toothed crown of the bracket 32; since the latter is integral with the projector unit 31, it will cause it to swing either up or down for adjusting its position.

According to this system, the force being required for causing a motion to the roller will be less.

Further embodiments and applications can be easily executed and applied by the man skilled in the art to the device for adjusting the position of a scooter headlight described by way of example, without departing from the novelty spirit of the present invention, and it is also clear that in the practical actuation of the invention the components might differ in form and size from the ones described and be replaced with technical equivalent elements.

For instance, the adjustment can be performed simultaneously on two headlight units.

## Claims

1. A device for adjusting the position of at least a headlight unit (3;30), of a scooter, comprising at least a projector unit (4;31), which can swing about an axis being transversal with respect to the running direction, characterized in that there are provided adjustment means (12;32) for said projector unit (4;31), actuation means (7;17) for said adjustment and means (6;14,15;35) for transmitting the adjustment from said actuation means (7;17) to said adjustment means (12;32), in order to obtain the adjustment of the position of the headlight unit directly from the driving position.

2. A device according to claim 1, characterized in that said adjustment means (12;32) for said projector unit (4;31) comprise a bracket (12;32), said bracket (12;32) being integral with said projector unit (4;31).

3. A device according to claim 1, characterized in that said actuation means (7;17) for said adjustment comprise a roller 87;17).

4. A device according to claims 1 and 3, characterized in that said transmission means (6;14,15;35) comprise a rod and/or a small shaft (6;35), to which said adjusting roller (7) is integral with.

5. A device according to claim 3, characterized in that said adjustment transmission (6;14,15;35) comprise at least a pin and/or a small shaft (14;35), a flexible cable (15) integral with said pin and/or small shaft (14;35), said flexible cable being integral with said roller (17).

6. A device according to claim 2, characterized in that said bracket (12) has a threaded hole.

7. A device according to claim 2, characterized in that said bracket (12) has substantially the shape of a circular crown arch, whose axis is substantially coincides with the transversal axis about which the projector unit can swing.

8. A device according to claim 7, characterized in that the external part of said circular crown has indentations suitable to engage with a worm screw (33).

9. A device according to claim 4, characterized in that said rod (6) has a threaded end which engages with the threaded hole of said bracket (12), and a ring (11) for stopping the entry of said rod (6) in the body of said headlight unit (3).

10. A device according to claim 4, characterized in that said rod (35) has a worm screw (33) engaging the indentations of said bracket (32).

11. A device according to claim 1, characterized in that actuation said means (7;17) are located inside a recess being accessible by the user when seated in the driving position.

12. A device according to claim 3, characterized in that a part of the circular crown of said roller (7) protrudes in a tray recess (2) through a sift (9) being define on a portion of said tray recess (2), said tray recess being obtained on the inner side of the scooter shield.

13. A device according to claims 5 and 6, characterized in that said pin (14) has a threaded end engaging said threaded hole of said bracket (12) and a ring (16) for stopping the entry of said pin (14) in the body of said headlight unit (3).

14. A device according to claim 3, characterized in that said roller (17) is positioned inside a tray recess (2).

15. A device according to claims 12 and 14, characterized in that said tray recess (2) has a key-lock.

16. A device according to claims 2 and 6, characterized in that a nut is inserted in said bracket (12) for coupling said bracket (12) with the threaded end of said rod (6).

17. A device according to claims 2 and 13, characterized in that a nut is inserted in said bracket (12) for coupling said stirrup (12) with the threaded end of said pin (14).

18. A device according to one or more of the previous claims, characterized in that a spring (13) is provided opposing the swing motion of the projector unit (4).

19. A device according to claims 4 and 10, characterized in that the lengthwise motion of said rod and/or pin (35) is hindered in one direction by an elastic ring (38) inserted in a throat on said rod and/or pin (35), and in the other direction by a support (34) on said body of the headlight unit (3).

20. A device for adjusting the position of at least a headlight, for a scooter, comprising one or more of the elements and/or means described in the previous claims.
